## Europäisches Patentamt
## European Patent Office
## Office européen des brevets

(11) Veröffentlichungsnummer: **0 276 354 B1**

(12) **EUROPÄISCHE PATENTSCHRIFT**

(45) Veröffentlichungstag der Patentschrift: **18.09.91**

(51) Int. Cl.5: **A01G 25/00**

(21) Anmeldenummer: **87103422.9**

(22) Anmeldetag: **10.03.87**

(54) **Beregnungsvorrichtung für Hallen mit Wasser aufnehmendem Bodenbelag.**

(43) Veröffentlichungstag der Anmeldung:
**03.08.88 Patentblatt 88/31**

(45) Bekanntmachung des Hinweises auf die
Patenterteilung:
**18.09.91 Patentblatt 91/38**

(84) Benannte Vertragsstaaten:
**BE CH DE FR GB LI NL**

(56) Entgegenhaltungen:
**GB-A- 1 526 096**
**GB-A- 2 093 162**
**US-A- 2 608 412**

(73) Patentinhaber: **Jülich, Wilhelm**
**Rhodiusstrasse 35**
**W-5000 Köln 80(DE)**

(72) Erfinder: **Jülich, Wilhelm**
**Rhodiusstrasse 35**
**W-5000 Köln 80(DE)**

(74) Vertreter: **Koepsell, Helmut, Dipl.-Ing.**
**Mittelstrasse 7**
**W-5000 Köln 1(DE)**

## Beschreibung

Die Erfindung betrifft eine Beregnungsvorrichtung für Hallen mit Wasser aufnehmedem Bodenbelag gemäß dem Oberbegriff des Anspruches 1. Dabei kann es sich z. B. um Reithallen und Tennishallen handeln.

Die Zuleitungen für derartige Beregnungsvorrichtung sind im allgemeinen im oberen Bereich der Halle angeordnet, damit sie keine störenden Hindernisse oder sonstwie Gefahrenquellen bilden. Durchweg liegen die Zuleitungen oberhalb der Toreinfahrt, beispielsweise einer Reithalle mit der Folge, daß die Sprüher unterhalb des Niveaus angebracht sind, in welchem sich die Zuleitungen befinden. Dies hat zur Folge, daß nach Abstellen der Wasserzufuhr das in der Zuleitung und den Zweigleitungen zu den einzelnen Sprühern befindliche Wasser aus den Sprühdüsen der Sprüher tropft und im Boden gegenüber der Umgebung deutlich abgegrenzte Bereiche mit hoher Feuchtigkeit bildet, die für die sich in der Reithalle bewegenden Pferde und damit auch für die Reiter eine erhebliche Gefahrenquelle darstellen. Entsprechendes gilt für eine Tennishalle mit Aschebelag oder einem Boden mit ähnlicher Beschaffenheit

Der Erfindung liegt die Aufgabe zugrunde, eine Beregnungsvorrichtung der eingangs beschriebenen Art so auszugestalten, daß die vorbeschriebenen Nachteile vermieden werden.

Dabei soll die Beregnungsvorrichtung bezüglich Aufbau und Bedienung übersichtlich und einfach sein. Darüberhinaus wird angestrebt, daß das durch eine Zuleitung zuströmende Wasser auf die einzelnen an dieser Zuleitung angeschlossenen Sprüher gleichmäßig verteilt wird. Es soll ein möglichst geringer Wasserverbrauch dadurch erreicht werden, daß das gesamte versprühte Wasser dem vorgesehenen Zweck dient, also den Boden der Halle möglichst gleichmäßig befeuchtet.

Diese Aufgabe wird durch die Merkmale im Kennzeichen des Anspruches 1 gelöst. Im wesentlichen läuft die Erfindung darauf hinaus, daß die Zweigleitungen, an deren der Zuleitung abgekehrten Enden die Sprüher angebracht sind, jeweils nach oben von der jeweiligen Zuleitung abgehen, so daß nach Unterbrechen der Wasserzufuhr das in der Zuleitung noch befindliche Wasser nicht unter der Einwirkung der Schwerkraft durch die Zweigleitungen abfließen kann. Es ist zwar kaum zu vermeiden, daß das im Sprüher selbst und in dem daran anschließenden Abschnitt der Zweigleitung bis zum Einwegventil, welches der Belüftung dieses Abschnittes dient, befindliche Wasser durch den Sprüher nach unten, also auf den Boden der Halle abfließt bzw. abtropft. Diese Wassermenge ist jedoch im allgemeinen zu gering, als daß sie zu einer merklichen Veränderung der Beschaffenheit des Bodens der Halle führen könnte. Die durch das Einwegventil bewirkte Belüftung des Sprühers und des daran anschließenden Abschnittes der Zweigleitung verhindert in jedem Fall, daß sich in der Zweigleitung ein Unterdruck aufbaut, der das in den übrigen Bereichen derselben und in der Zuleitung befindliche Wasser durch Saugwirkung durch die Sprüher abfließen läßt.

Der angestrebte Effekt kann in besonders einfacher Weise dadurch erreicht werden, daß die Zweigleitung mit zwei vertikalen oder jeweils eine vertikale Komponente aufweisenden Abschnitten versehen ist, von denen der erste von der Zuleitung nach oben abgeht und der zweite am unteren Ende den Sprüher trägt, wobei beide Abschnitte durch einen dritten Abschnitt miteinander verbunden sind, der zugleich den horizontalen Abstand zwischen Zuleitung und Sprüher überbrücken kann. Zur Erzielung des angestrebten Effektes ist es nicht erforderlich, daß der nach oben von der Zuleitung abgehende Abschnitt der Zweigleitung eine Länge aufweist, die einige Zentimeter übersteigt. Bei der vorbeschriebenen, z. B. etwa U-förmigen Ausgestaltung der Zweigleitung oder zumindest eines Teils derselben ist es vorteilhaft, das Einwegventil am Übergang zwischen dem den Sprüher tragenden, im wesentlichen vertikal verlaufenden Schenkel des U-förmigen Zuleitungsbereichs sowie dem dritten Abschnitt anzuordnen.

Gemäß einem weiteren Vorschlag der Erfindung kann bei Vorhandensein von wenigstens zwei Zweigleitungen in wenigstens einer derselben ein Drosselventil angeordnet sein, welches dazu dient, eine gleichmäßige Verteilung des Wassers auf sämtliche Sprüher einer Zuleitung zu gewährleisten. Der Einfachheit halber kann das Drosselventil am Sprüher angebracht sein, und zwar an jenem Ende desselben, welches mit der Zweigleitung verbunden ist. Auf diese Weise wird eine besonders einfache Montage ermöglicht.

Um eine möglichst gleichmäßige und weiträumige Verteilung des den Sprüher verlassenden Wassers auf der zu beregnenden Fläche zu erreichen, kann der die Sprühdüse tragende Kopf des Sprühers in bekannter Weise eine hin- und hergehende Schwenkbewegung ausführen, wobei die am Umfang des Sprühergehäuses angeordnete Sprühdüse mit einer in den die Sprühdüse verlassenden Strahl hineinragenden Stellschraube versehen ist, durch die die Sprühweite des Sprühers beeinflußt wird. Bei bekannten Ausführungen ist die Anordnung so getroffen, daß die Stellschraube in der Betriebslage des Sprühers eine Verteilung des Sprühstrahls in im wesentlichen horizontaler Ebene bewirkt. Dies hat den Nachteil zur Folge, daß bei der im allgemeinen üblichen Anbringung des Sprühers in der Nähe irgendwelcher Einbauten oder Bauteilen der Halle in den beiden extremen Schwenklagen des hin- und herschwenkbaren Sprühkopfes ein Teil des die Sprühdüse verlassenden Wassers auf diese Bauteile trifft und somit nicht für die Befeuchtung des Bodens der Halle nutzbar gemacht werden kann. Um dies zu vermeiden, schlägt die Erfindung weiterhin vor, daß die Stellschraube etwa senkrecht zur Schwenkachse des Sprühkopfes verlaufend derart angeordnet ist, daß sie von der Seite in den Sprühstrahl eindringt und diesen somit in im wesentlichen vertikaler Ebene verteilt, so daß bei entsprechend genauer Bemessung der Schwenkbewegung des Sprühkopfes die Gefahr eines Besprühens von Wänden, Banden oder anderen Einbauteilen der Reithalle vermieden werden kann.

Es ist zweckmäßig, die Sprühdüse in der Projektion senkrecht zur Längsachse des Sprühers in einem zum Gehäuse desselben im wesentlichen radialen Rohrabschnitt anzubringen und die Stellschraube in einer etwa radialen Bohrung dieses Rohrabschnittes zu führen, die in der Betriebslage des Sprühers im wesentlichen horizontal verläuft.

Vorteilhaft ist die Sprühdüse am Sprüher so angeordnet, daß ihre Längsachse in der Betriebslage im wesentlichen horizontal verläuft. Eine andere Möglichkeit sieht vor, daß bei in der Betriebslage befindlichem Sprüher die Längsachse der Sprühdüse in Sprührichtung nach oben gerichtet ist und mit der Horizontalen einen Winkel bis zu 30° einschließt.

Im allgemeinen ist der Sprüher so ausgebildet, daß in der Betriebslage desselben die Sprühdüse sich am unteren Ende des Sprühers und die Eintrittsöffnung für das zu versprühende Wasser sich am oberen Ende befindet.

Im übrigen hat es sich als vorteilhaft hergestellt, in jeder Zuleitung einen Rückschlagminderer einzubauen, damit beim Öffnen und Schließen der Zuleitung die Rückschläge zumindest verringert werden.

In der Zeichnung ist ein Ausführungsbeispiel der Erfindung im Schema dargestellt. Es zeigen:

Fig. 1   die perspektivische Ansicht einer Beregnungsanlage für eine Halle,

Fig. 2   einen Schnitt nach der Linie II-II der Fig. 1,

Fig. 3   einen Schnitt nach der Linie III-III der Fig.1,

Fig. 4   einen Schnitt nach der Linie IV-IV der Fig. 2,

Fig. 5   eine Ansicht in Richtung des Pfeiles V der Fig. 4.

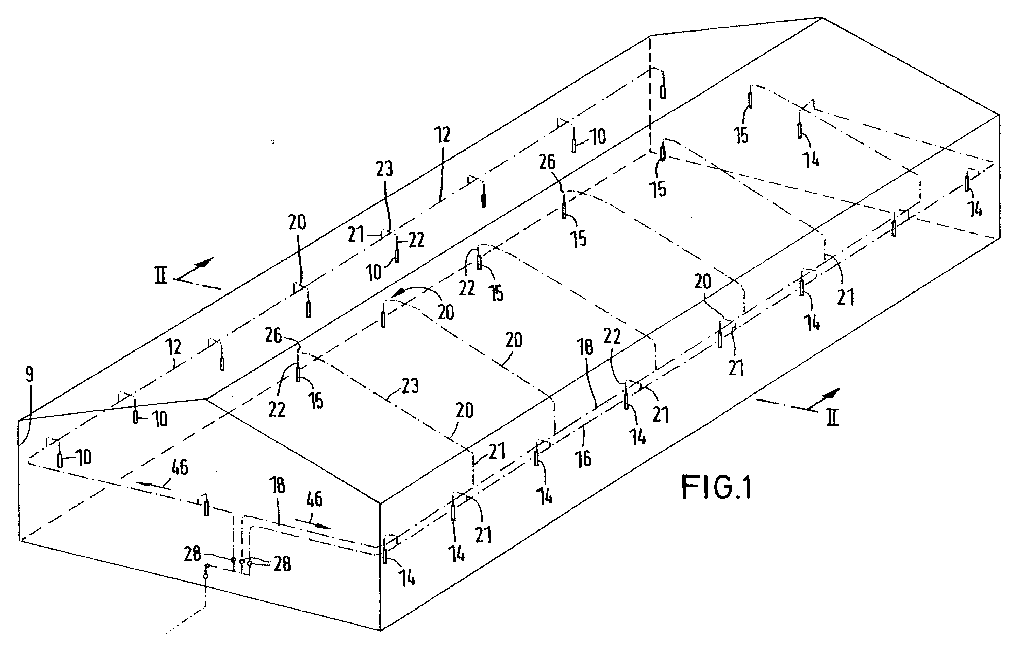

Die in Fig. 1 dargestellte Beregnungsvorrichtung ist mit einer Vielzahl von Sprühern versehen, die gruppenweise an eine gemeinsame Zuleitung angeschlossen sind. Die den in Blickrichtung der Fig. 1 links liegenden Bereich der Halle 9 beregnenden Sprüher 10 sind an eine gemeinsame Zuleitung 12 angeschlossen. Die den rechts liegenden Bereich der Halle beregnenden Sprüher 14 sind an eine gemeinsame Zuleitung 16 angeschlossen. Außerdem ist eine dritte Zuleitung 18 vorgesehen, durch die das Wasser für in der Hallenmitte im Bereich des Dachfirsts angeordnete Sprüher 15 zugeführt wird.

Zumindest die jeweils seitlich befindlichen Sprüher 10 und 14 sind auf einem Niveau angeordnet, welches unterhalb des Niveaus der jeweils zugehörigen Zuleitung 12 bzw. 16 liegt. Jedem der Sprüher 10, 14, 15 ist eine Zweigleitung 20 zugeordnet, durch die die Verbindung zwischen Sprüher und jeweils zugehöriger Zuleitung 12 bzw. 16 bzw. 18 hergestellt wird. Jede der Zweigleitungen 20 besteht im wesentlichen aus drei Abschnitten, von denen der erste Abschnitt 21 von der Zuleitung 12 bzw. 16 bzw. 18 vertikal nach oben abgeht. Ein zweiter, sich davon in einem Abstand befindlicher vertikaler Abschnitt 22 trägt an seinem unteren Ende den Sprüher 10 bzw. 14 bzw. 15. Beide Abschnitte 21 und 22 werden durch einen dritten Abschnitt 23 miteinander verbunden, der bei dem den seitlichen Sprühern zugeordneten Zweigleitungen im wesentlichen horizontal verläuft und relativ kurz ist, bei den Zweigleitungen für die etwa in der Hallenmitte angeordneten Sprüher 15 dagegen geneigt verläuft und entsprechend dem Abstand der Sprüher 15 von der Zuleitung 18 länger ist. In allen Fällen weisen die Zweigleitungen einen im wesentlichen U-förmigen Verlauf auf.

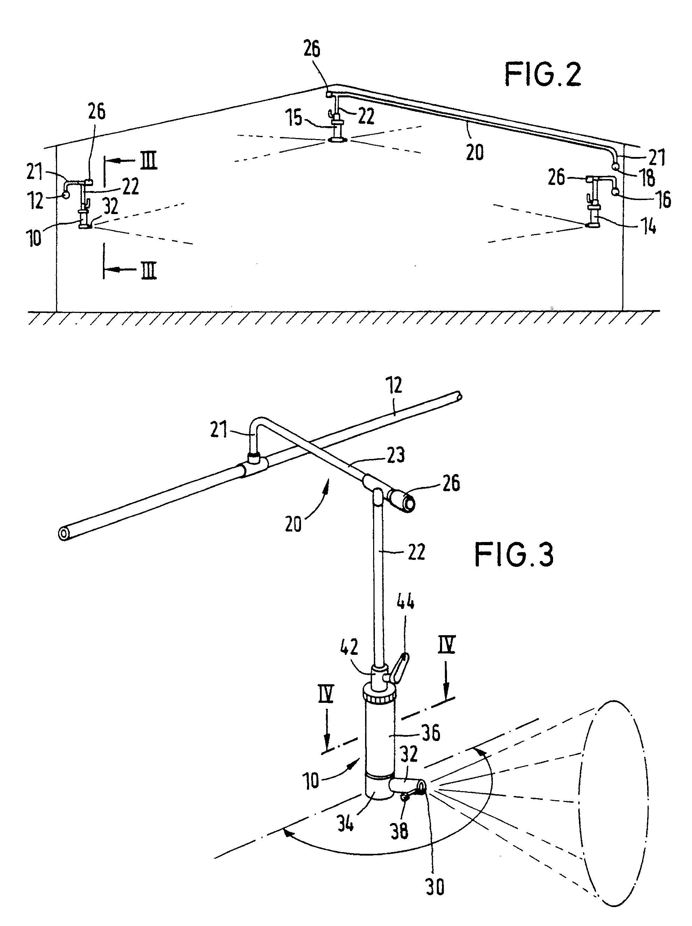

Dies ist insbesondere in Fig. 3 zu erkennen, die eine links in der Halle befindlichen Zweigleitungen 20 mit daran angebrachtem Sprüher 10 in größerem Maßstab zeigt. Am Übergang zwischen dem zweiten, vertikalen Abschnitt 22 und dem dritten, im wesentlichen horizontal verlaufenden Abschnitt 23 der Zweigleitung 20 ist ein Belüftungsventil 26 angeordnet, welches als Einwegventil ausgebildet ist und bei Druckabfall im Leitungssystem 12, öffnet und somit den vertikalen, zweiten Abschnitt 22 belüftet mit dem Ergebnis, daß nach Abstellen der Wasserzufuhr am zugehörigen Absperrventil 28 nur das im Sprüher 10 und im zweiten Abschnitt 22 der Zweigleitung 20 befindliche Wasser nach unten durch die Sprühdüse 30 des jeweiligen Sprühers abtropft. Diese Wassermenge ist verhältnismäßig gering, so daß sie zu keiner ins Gewicht fallenden nachteiligen Beeinflußung der Bodenverhältnisse in der Halle führt. Aufgrund des Belüftungsventils 26 ist es jedoch ausgeschlossen, daß sich im vertikalen Abschnitt 22 und im Sprüher ein Unterdruck aufbaut, der dazu führt, daß das in den übrigen Bereichen der Zweigleitung 20 und in der zugehörigen Zuleitung befindliche Wasser angesaugt wird und durch den Sprüher in solchen Mengen auf den Boden der der Halle tropft oder läuft, daß es in einem kleinen Bereich zu einer unerwünscht hohen Ansammlung von Feuchtigkeit kommt.

Sämtliche Sprüher 10, 14 und 15 sind, wie insbesondere Fig. 3 erkennen läßt, so angeordnet, daß die Sprühdüse 30 sich am unteren Ende des Sprühers befindet. Die Sprühdüse 30 ist innerhalb eines kurzen Rohrabschnittes 32 angebracht, der im wesentlichen horizontal und radial am Kopf 34 des Sprühers befestigt ist. Dieser Kopf ist gegenüber dem Körper 36 des Sprühers um dessen Längsachse um beispielsweise 180° hin-und herschwenkbar angebracht. Die Antriebsmittel für den Kopf 34 sind innerhalb des Körpers 36 des Sprühers 10 angeordnet. Es handelt sich dabei um bekannte Mittel.

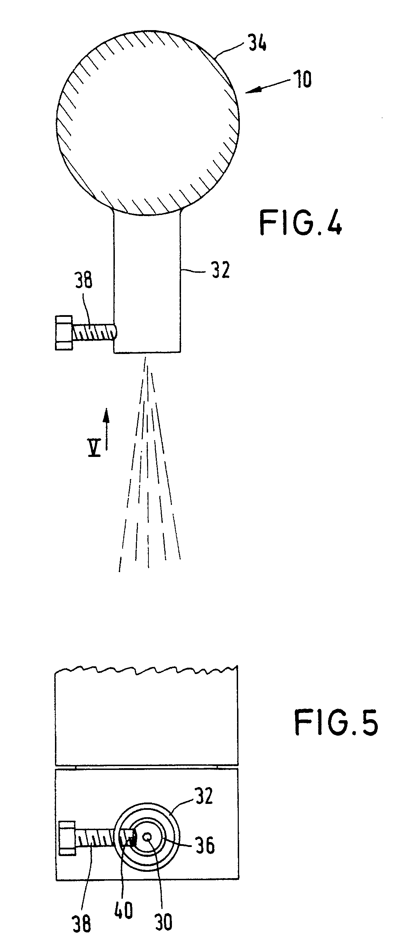

Das Vorhandensein des kurzen radialen Rohrabschnitts 32, innerhalb dessen die Sprühdüse 30 angeordnet ist, hat den Vorteil, daß es ohne weiteres möglich ist, die Lage der eigentlichen Düse 30, also des Durchgangkanals für das Wasser, den jeweiligen Erfordernissen anzupassen. Im allgemeinen wird die Düse von einem Einsatz 36 (Fig. 5) getragen, der so angeordnet werden kann, daß der Kanal 30 in Strömungsrichtung nach oben weist.

Das Vorhandensein des radialen Rohrabschnittes 32 hat darüber hinaus den Vorteil, daß es in besonders einfacher Weise möglich ist, eine Stellschraube 38 anzubringen, die in einer mit einem entsprechenden Gewinde versehenen Durchbrechungen der Wandung des Rohrabschnittes 32 geführt ist. Dabei ist die Anordnung so getroffen, daß diese Schraube im wesentlichen horizontal und unter einem rechten Winkel zur Längsachse des Rohrabschnittes 32 verläuft. Mit ihrem Ende 40 ragt sie in den Bereich des die Düse 30 verlassenden Wasserstrahls hinein mit der Folge, daß dieser Strahl überwiegend in vertikaler Ebene aufgefächert wird, wie dies etwa die Fig. 2, 3 und 4 zeigen.

Dieses vertikale Auffächern hat den Vorteil, daß die Schwenkbewegung des Sprüherkopfes 34 voll ausgenutzt und dabei weitgehend vermieden werden kann, daß Teile des Wasserstrahls zumindest in den Extremlagen des Sprüherkopfes 34 Teile der Hallenkonstruktion, also beispielsweise Bereiche der Wandungen, besprühen.

Am oberen Ende jedes Sprühers ist ein Drosselventil 42 angebracht, das mittels eines Bedienungshebels 44 einstellbar ist. Durch entsprechende Betätigung der Drosselventile 42 aller einer Zuleitung 12, 16, 18 zugeordneter Sprüher 10, 14 bzw. 20 kann erreicht werden, daß sämtliche Sprüher von der vorgeschalteten Zuleitung mit etwa gleichen Wassermengen beschickt werden. Dabei wird es im wesentlichendarauf ankommen, die Drosselventile 42 der dem jeweiligen Absperrventil 28 näherliegenden Sprüher so einzustellen, das auch noch ausreichend Wasser zu den vom jeweiligen Absperrventil 28 weiter entfernt liegenden Sprühern strömt.

Die in der Mitte der Halle befindlichen, an die Zuleitung 18 angeschlossenen Sprüher 20 werden im allgemeinen höher liegen als die entlang den Wänden verteilt angeordneten Sprüher 10 und 14, also ggf. noch oberhalb der zugeordneten Zuleitung 18. Trotzdem ist es auch hier zur Erzielung des angestrebten Effekts zweckmäßig, am Ende des vertikalen Rohrabschnittes 22 der jeweiligen Zuleitung 20 ein Belüftungsventil 26 vorzusehen, da sonst die Gefahr besteht, daß bei Schließen des Absperrventils 28 in der beschriebenen Weise aufgrund der ohne das Belüftungsventil 26 auftretenden Saugwirkung das Wasser aus der Zuleitung 18 und der jeweiligen relativ langen Zweigleitung 20 abgesaugt wird und aus dem Sprüher 15 heraustropft.

Die in der Hallenmitte befindlichen Sprüher 15 können um 360° geschwenkt werden. Dies ist in Fig. 2 durch den beidseitig dargestellten Wasserfächer angedeutet. Dies ist jedoch für die Erfindung unwesentlich. Entscheidend ist vielmehr, daß die Zweigleitung 20 von der jeweiligen Zuleitung 12, 16, 18 zuerst nach oben abgeht, wobei dieser erste Abschnitt auch nicht genau vertikal zu laufen braucht, und daß durch das an geeigneter Stelle angebrachte Belüftungsventil das Entstehen eines Unterdrucks vermieden wird, der ein Nachsaugen des nach Schließen des jeweiligen Absperrventils 28 im Leitungssystem noch befindlichen Wassers bei unter dem Niveau der jeweiligen Zuleitung liegenden Sprühdüse des jeweiligen Sprühers bewirken würde.

**Patentansprüche**

1.  Beregnungsvorrichtung mit wenigstens einer im oberen Bereich einer mit einem Wasser aufnehmenden Bodenbelag ausgestalteten Reithalle verlegten Zuleitung (12, 16, 18) für zu versprühendes Wasser, an die unter Zwischenschaltung wenigstens einer Zweigleitung(20) wenigstens ein Sprüher (10, 14, 15) angeschlossen ist, dessen Austrittsöffnung (30) unter dem Niveau der zugehörigen Zuleitung und/oder Zweigleitung liegt, dadurch gekennzeichnet, daß die Zweigleitung (20) einen ersten, von der Zuleitung (12, 16, 18) abgehenden Abschnitt (21) aufweist, dessen höchster Punkt oberhalb der Zuleitung(12, 6, 18) liegt, und einen mit dem ersten Abschnitt (21) verbundenen zweiten Abschnitt(22) aufweist, dessen den Sprüher tragendes Ende unterhalb des höchsten Punktes des ersten Abschnittes (21) liegt und in der Zweigleitung (20) ein Einwegventil (26) angeordnet ist, welches bei Druckabfall in Zuleitung (12, 16, 18) und Zweigleitung (20) den Sprüher und/oder den oberhalb des Sprühers (10, 14, 15) befindlichen Abschnitt der Zweigleitung (20) mit der Atmosphäre verbindet.

2. Beregnungsvorrichtung nach Anspruch 1, dadurch gekennzeichnet, daß erster Abschnitt (21) und zweiter Abschnitt (22) der Zweigleitung (20) Teile eines im wesentlichen U-förmigen Leitungsbereichs (21, 22, 23) sind.

3. Beregnungsvorrichtung nach Anspruch 2, dadurch gekennzeichnet, daß das Einwegventil (26) am Übergang zwischen dem den Sprüher (10, 14, 15) tragenden, im wesentlichen vertikal verlaufenden zweiten Abschnitt (22) des U-förmigen Leitungsbereichs (21, 22, 23) sowie einem dem Abstand zwischen diesem zweiten Abschnitt (22) und dem ersten Abschnitt (21) der Zweigleitung überbrücken dritten Abschnitt (23) angeordnet ist.

4. Beregnungsvorrichtung nach Anspruch 1, dadurch gekennzeichnet, daß bei Vorhandensein von wenigstens zwei Zweigleitungen(20) an einer Zuleitung (12, 16, 18) in wenigstens einer der Zweigleitungen (20) ein Drosselventil (42) angeordnet ist.

5. Beregnungsvorrichtung nach Anspruch 4, dadurch gekennzeichnet, daß das Drosselventil (42) am Sprüher (10, 14, 15) angebracht ist.

6. Beregnungsvorrichtung nach Anspruch 1, dadurch gekennzeichnet, daß der die Sprühdüse-(30) tragende Kopf(34) des Sprühers(10, 14, 15) eine hin-und hergehende Schwenkbewegung ausführt und die am Umfang des Sprühergehäuses angebrachte Sprühdüse(30) mit einer etwa senkrecht zur Schwenkachse verlaufenden Stellschraube (38) versehen ist, deren Position die Sprühweite des Sprühers beeinflußt.

7. Beregnungsvorrichtung nach Anspruch 6, dadurch gekennzeichnet, daß die Sprühdüse (30) in der Projektion senkrecht zur Längsachse des Sprühers (10, 14, 15) in einem zum Gehäuse des Sprühers im wesentlichen radialen, am Gehäuse befestigten Rohrabschnitt (32) angebracht ist und die Stellschraube (38) in einer etwa radialen Bohrung dieses Rohrabschnittes (32) geführt ist.

8. Beregnungsvorrichtung nach Anspruch 6, dadurch gekennzeichnet, daß die Sprühdüse (30) am Sprüher (10, 14, 15) so angeordnet ist, daß ihre Längsachse in der Betriebslage des Sprühers im wesentlichen horizontal verläuft.

9. Beregnungsvorrichtung nach Anspruch 6, dadurch gekennzeichnet, daß die Sprühdüse(30) am Sprüher (10, 14, 15) so angeordnet ist, daß ihre Längsachse in der Betriebslage des Sprühers in Sprührichtung nach oben gerichtet ist und mit der Horizontalen einen Winkel bis zu 30° C einschließt.

10. Beregnungsvorrichtung nach einem der vorhergehenden Ansprüche, dadurch gekennzeichnet, daß die Sprühdüse(30) in der Betriebslage des Sprühers (10, 14, 15) am unteren Ende desselben und die Eintrittsöffnung für das zu versprühende Wasser am oberen Ende des Sprühers angeordne ist.

## Claims

1. A sprinkler irrigation device having at least one feed pipe (12, 16, 18) for water to be sprayed, which feed pipe is laid in the upper region of an indoor riding arena provided with a water-absorbent floor covering and to which there is connected at least one spray device (10, 14, 15) with the interposition of at least one branch pipe (20), the outlet opening (30) of the spray device being below the level of the associated feed pipe and/or branch pipe, characterised in that the branch pipe (20) has a first portion (21) which extends from the feed pipe (12, 16, 18) and the highest point of which is above the feed pipe (12, 16, 18), and a second portion (22) which is connected to the first portion (21) and whose end which carries the spray device is below the highest point of the first portion (21), and arranged in the branch pipe (20) is a one-way valve (26) which in the event of a drop in pressure in the feed pipe (12, 16, 18) and the branch pipe (20) communicates the spray device and/or the portion of the branch pipe (20) which is above the spray device (10, 14, 15) with the atmosphere.

2. A sprinkler irrigation device according to claim 1 characterised in that the first portion (21) and the second portion (22) of the branch pipe (20) are parts of a substantially U-shaped pipe region (21, 22, 23).

3. A sprinkler irrigation device according to claim 2 characterised in that the one-way valve (26) is disposed at the transition between the substantially vertically extending second portion (22) of the U-shaped pipe region (21, 22, 23), which second portion carries the spray device (10, 14, 15), and a third portion (23) which bridges the space between said second portion (22) and the first portion (21) of the branch pipe.

4. A sprinkler irrigation device according to claim 1 characterised in that, when there are at least two branch pipes (20) on a feed pipe (12, 16, 18), a throttle valve (42) is disposed in at least one of the branch pipes (20).

5. A sprinkler irrigation device according to claim 4 characterised in that the throttle valve (42) is mounted on the spray device (10, 14, 15).

6. A sprinkler irrigation device according to claim 1 characterised in that the head (34) of the spray device (10, 14, 15), which carries the spray nozzle (30), performs a reciprocating pivotal movement and the spray nozzle (30) which is mounted at the periphery of the housing of the spray device is provided with an adjusting screw (38) which extends substantially perpendicularly to the pivot axis and the position of which influences the width of spray of the spray device.

7. A sprinkler irrigation device according to claim 6 characterised in that the spray nozzle (30) is mounted in projecting relationship normal to the longitudinal axis of the spray device (10, 14, 15) in a pipe portion (32) which is substantially radial with respect to the housing of the spray device and which is fixed to the housing, and the adjusting screw (38) is guided in a substantially radial bore in said pipe portion (32).

8. A sprinkler irrigation device according to claim 6 characterised in that the spray nozzle (30) is arranged on the spray device (10, 14, 15) in such a way that its longitudinal axis extends substantially horizontally in the operative position of the spray device.

9. A sprinkler irrigation device according to claim 6 characterised in that the spray nozzle (30) is arranged on the spray device (10, 14, 15) in such a way that in the operative position of the spray device the longitudinal axis of the spray nozzle is directed upwardly in the spray direction and includes an angle of up to 30° with the horizontal.

10. A sprinkler irrigation device according to one of the preceding claims characterised in that in the operative position of the spray device (10, 14, 15) the spray nozzle (30) is arranged at the lower end of the spray device and the intake opening for the water to be sprayed is arranged at the upper end of the spray device.

**Revendications**

1. Dispositif d'arrosage en pluie pour une salle dont le sol absorbe l'eau et qui est équipée à sa partie supérieure d'au moins une canalisation d'arrivée (12,16,18) pour l'eau d'arrosage, à laquelle est raccordée au moins une canalisation secondaire (20) qui alimente au moins une pomme d'arrosage (10,14,15) ayant son orifice de sortie situé en-dessous du niveau de la canalisation d'arrivée ou de la canalisation secondaire correspondante, caractérisé en ce que la canalisation secondaire (20) comporte une première partie (21) qui part de la canalisation d'arrivée, et dont le point le plus haut est situé au-dessus de la canalisation d'arrivée (12,16,18), et une deuxième partie (22) raccordée à la première partie (21) et dont l'extrémité portant la pomme d'arrosage se trouve en-dessous du point le plus haut de la première partie (21), et en ce qu'une soupape à sens unique (26) est montée sur chaque canalisation secondaire (20) et prévue pour réagir en cas d'une chute de pression dans la canalisation d'arrivée (12,16,18) et dans la canalisation secondaire (20) pour mettre en communication avec l'atmosphère la pomme d'arrosage et/ou la partie de la canalisation secondaire (20) située au-dessus du niveau de la pomme d'arrosage (10,14,15).

2. Dispositif d'arrosage selon la revendication 1, caractérisé en ce que la première partie (21) et la deuxième partie (22) de la canalisation secondaire (20) constituent un circuit ayant sensiblement la forme d'un U (21,22,23).

3. Dispositif d'arrosage selon la revendication 2, caractérisé en ce que la soupape à sens unique (26) est disposée à l'endroit du raccordement entre la deuxième partie sensiblement verticale (22) du circuit (21,22,23) en forme d'U, qui porte la pomme d'arrosage (10,14, 15), et une troisième partie (23) de la canalisation secondaire qui relie cette deuxième partie (22) avec la première partie (21).

4. Dispositif d'arrosage selon la revendication 1, caractérisé en ce que, s'il existe au moins deux canalisations secondaires (20) raccordées à une canalisation d'arrivée (12,16,18), une soupape d'étranglement (42) est montée sur au moins l'une des canalisations secondaires (20).

5. Dispositif d'arrosage selon la revendication 4, caractérisé en ce que la soupape d'étranglement (42) est montée sur la pomme d'arrosage (10,14,15).

6. Dispositif d'arrosage selon la revendication 1, caractérisé en ce que la tête (34) de la pomme d'arrosage (10,14,15) qui porte le gicleur de pulvérisation (30) est animée d'un mouvement oscillant de va-et-vient, et en ce que le gicleur de pulvérisation (30) monté à la périphérie du boîtier de la pomme d'arrosage est pourvu d'une vis de réglage (38) dont l'axe est sensiblement perpendiculaire à celui du mouvement oscillant et dont la position détermine la largeur de l'arrosage assuré par la pomme.

7. Dispositif d'arrosage selon la revendication 6, caractérisé en ce que le gicleur de pulvérisation (30) est monté sur une tubulure (32) perpendiculaire à l'axe longitudinal de la pomme d'arrosage (10,14,15) et sensiblement radiale par rapport au corps de la pomme, et en ce que la vis de réglage (38) est guidée dans un trou sensiblement radial de cette tubulure (32).

8. Dispositif d'arrosage selon la revendication 6, caractérisé en ce que le gicleur (30) est monté sur la pomme d'arrosage (10,14,15) de telle manière que son axe longitudinal se trouve orienté sensiblement à l'horizontale en position de service de la pomme d'arrosage.

9. Dispositif d'arrosage selon la revendication 6, caractérisé en ce que le gicleur (30) est monté sur la pomme d'arrosage (10,14,15) de telle manière que son axe longitudinal, en position de service de la pomme d'arrosage, se trouve calé dans une direction de projection orientée vers le haut, en faisant avec l'horizontale un angle qui peut atteindre $30°$.

10. Dispositif d'arrosage selon l'une des revendications 1 à 9, caractérisé en ce que le gicleur d'arrosage (30), en position de service de la pomme d'arrosage (10,14,15), se trouve à l'extrémité inférieure de celle-ci, l'orifice d'entrée de l'eau d'arrosage se trouvant alors à l'extrémité supérieure de la pomme d'arrosage.

FIG.1

FIG.2

FIG.3

EP 0 276 354 B1

34

10

FIG.4

38

32

V

FIG.5

32

36

38  40  30

10